# FASCICULE DE BREVET EUROPEEN

(11) **EP 2 396 571 B1**
(45) Date de publication et mention de la délivrance du brevet: **04.04.2018**
(21) Numéro de dépôt: 10707099.7
(22) Date de dépôt: 15.02.2010
(51) Int. Cl.: F16H 57/04, F02C 3/107

(54) **LUBRIFICATION ET REFROIDISSEMENT D'UN REDUCTEUR A TRAIN D'ENGRENAGES EPICYCLOÏDAL**
SCHMIERUNG UND KÜHLUNG EINES UNTERSETZUNGSGETRIEBES MIT PLANETENGETRIEBE
LUBRICATION AND COOLING OF A REDUCTION GEAR WITH EPICYCLIC GEAR TRAIN

(30) Priorité: 16.02.2009 FR 0900692
(43) Date de publication de la demande: 21.12.2011
(73) Titulaire: Snecma, 75015 Paris (FR)
(72) Inventeur: GAUTHIER, Gérard, Philippe, 77550 Moissy Cramayel Cedex (FR); MORREALE, Serge, René, 77550 Moissy Cramayel Cedex (FR)
(74) Mandataire: Pichat, Thierry
(86) Numéro de dépôt international: PCT/FR2010/000121
(87) Numéro de publication internationale: WO 2010/092263

(56) Documents cités:
- DE-U- 1 985 822
- FR-A- 2 928 976
- GB-A- 2 234 035

## Description

L'invention concerne essentiellement un dispositif de lubrification et de refroidissement d'un réducteur à train d'engrenages épicycloïdal, en particulier dans une turbomachine telle qu'un moteur d'avion.

Un réducteur à train d'engrenages épicycloïdal permet de transmettre de fortes puissances. Dans un moteur à turboréacteur, il peut être utilisé pour entraîner des hélices contrarotatives à partir d'un arbre moteur qui tourne beaucoup plus vite que les hélices.

De façon classique, un train d'engrenages épicycloïdal comprend un pignon planétaire ou pignon central, une couronne planétaire ou couronne extérieure et des pignons satellites qui sont en prise avec le pignon planétaire et avec la couronne, le support de l'un de ces trois composants devant être bloqué en rotation pour le fonctionnement du train d'engrenages. Lorsque le porte-satellites est fixe en rotation, le pignon central et la couronne sont menant et mené, respectivement, ou inversement. La lubrification et le refroidissement des engrènements et des axes des pignons satellites ne posent alors aucun problème et sont assurés par des gicleurs qui sont fixes en rotation et qui peuvent projeter de l'huile en permanence sur les zones d'engrènement des pignons satellites avec le pignon central et avec la couronne et sur les axes des pignons satellites.

Toutefois, dans le cas le plus fréquent, la couronne extérieure est fixe en rotation et le pignon central et le porte-satellites sont menants et menés. La lubrification des zones d'engrènement et des axes des pignons satellites pose alors un problème qui est résolu dans la technique actuelle par des réseaux complexes de conduits de cheminement d'huile sous pression, utilisant des joints dynamiques ou joints tournants qui sont soumis à une usure et qu'il faut vérifier et changer régulièrement.

Le document DE1985822 décrit un train d'engrenages épicycloïdal comprenant des moyens d'alimentation en huile.

La présente invention a notamment pour but d'assurer le refroidissement et la lubrification d'un tel réducteur de façon permanente et sans recourir à un réseau complexe de conduits d'huile sous pression à joints tournants.

Elle propose à cet effet un réducteur à train d'engrenages épicycloïdal comprenant un pignon central, une couronne extérieure et des pignons satellites en prise avec le pignon central et avec la couronne extérieure et montés libres en rotation sur un porte-satellites, ce réducteur comprenant des moyens de lubrification et de refroidissement par projection d'huile sur les zones d'engrènement et sur les axes des pignons satellites, caractérisé en ce que les moyens de lubrification et de refroidissement comprennent une enveloppe cylindrique solidaire du porte-satellites et formant une écope de récupération d'huile entourant des moyens fixes d'amenée d'huile.

Pour assurer la lubrification et le refroidissement des zones d'engrènement des pignons satellites et de leurs axes de rotation, il suffit, selon l'invention, d'équiper le porte-satellites d'une enveloppe cylindrique qui entoure des moyens fixes d'amenée d'huile. L'huile amenée par ces moyens est récupérée par effet centrifuge dans l'enveloppe cylindrique d'où elle peut être acheminée jusqu'aux zones d'engrènement des pignons satellites et jusqu'aux axes de ces pignons satellites sans qu'il soit nécessaire d'utiliser pour cela des joints tournants.

Ces moyens de lubrification et de refroidissement se caractérisent donc par leur simplicité et leur fiabilité, ainsi que par leur compatibilité avec les moyens d'alimentation en huile d'autres postes à lubrifier et à refroidir dans une turbomachine, ce qui permet d'installer une pompe commune d'alimentation en huile du réducteur et des autres postes à lubrifier et refroidir.

Selon une autre caractéristique de l'invention, l'enveloppe cylindrique comprend des conduits radiaux ou sensiblement radiaux alimentant en huile des gicleurs orientés vers les zones d'engrènement et les axes des pignons satellites.

Dans un mode de réalisation préféré de l'invention, les moyens fixes d'amenée d'huile comprennent au moins une rampe parallèle à l'arbre du pignon central et portant des injecteurs orientés radialement vers l'enveloppe cylindrique, celle-ci comprenant des compartiments annulaires séparés par des cloisons radiales et reliés chacun à des conduits alimentant des gicleurs.

Cette configuration permet de distribuer l'huile de façon plus uniforme et régulière vers les différentes zones à lubrifier et refroidir.

De façon pratique, l'enveloppe cylindrique et le porte-satellites peuvent être positionnés axialement de part et d'autre du pignon central et sont reliés par des bras axiaux qui s'étendent entre les pignons satellites.

L'invention concerne également une turbomachine telle qu'un turboréacteur de moteur d'avion, caractérisé en ce qu'elle comprend un réducteur à train d'engrenages épicycloïdal du type décrit ci-dessus, qui relie un arbre de turbine à un ou deux arbres d'entraînement d'hélice.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une demi-vue schématique en coupe axiale d'un réducteur à train d'engrenages épicycloïdal dans une turbomachine de la technique antérieure ;
- la figure 2 est une vue schématique de face du réducteur de la figure 1 ;
- la figure 3 est une vue schématique de face d'un réducteur selon l'invention ;
- la figure 4 est une vue schématique en coupe axiale de ce réducteur ;
- la figure 5 est une demi-vue schématique en coupe axiale du réducteur selon l'invention monté dans une turbomachine.

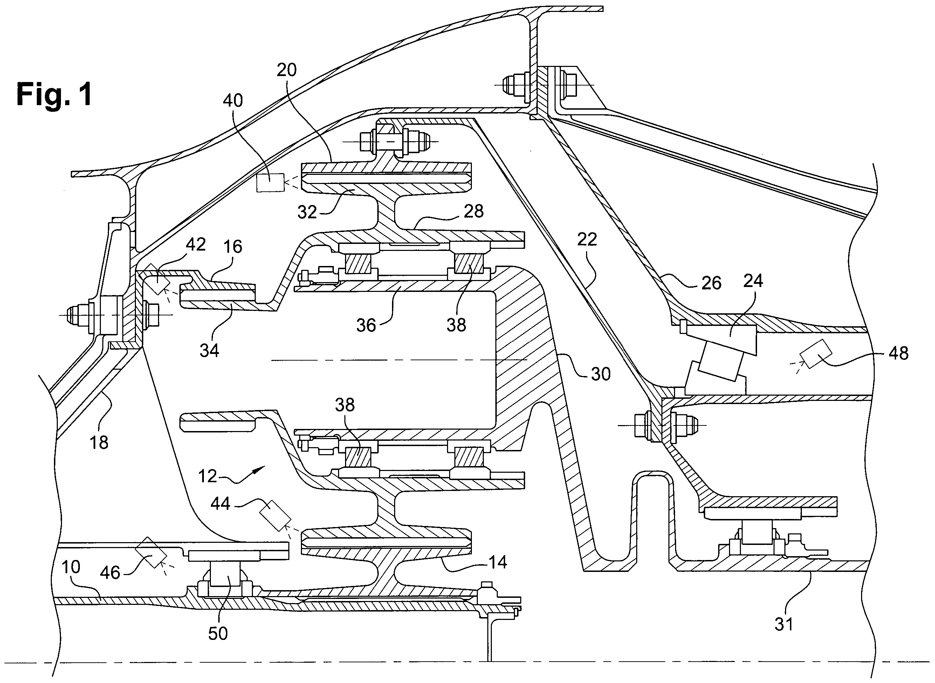

On se réfère d'abord à la figure 1 qui représente schématiquement un réducteur connu à train d'engrenages épicycloïdal, monté dans une turbomachine telle qu'un turboréacteur de moteur d'avion à deux hélices contrarotatives qui sont entraînées en rotation à partir d'un arbre de turbine 10 par un réducteur 12 à train d'engrenages épicycloïdal comprenant essentiellement un pignon central ou pignon planétaire 14 solidaire en rotation de l'arbre de turbine 10, une première couronne extérieure fixe 16 montée sur un élément fixe 18 de la turbomachine, une seconde couronne extérieure mobile 20 qui est fixée en bout d'un arbre 22 d'entraînement en rotation d'une des hélices du moteur, cet arbre s'étendant vers l'aval et étant guidé en rotation par des paliers 24 sur un élément 26 du châssis fixe du moteur, le réducteur comprenant encore des pignons satellites 28 qui sont en prise avec le pignon central 14, avec la première couronne extérieure fixe 16 et avec la seconde couronne extérieure mobile 20 et qui sont montés libres en rotation sur un porte-satellites 30 solidaire d'un arbre 31 qui s'étend vers l'aval pour l'entraînement en rotation de la seconde hélice du moteur.

Plus précisément, chaque pignon satellite 28 comprend une première denture périphérique 32 qui est en prise avec une denture interne de la seconde couronne extérieure 20, et une seconde denture 34, coaxiale à la première et formée à l'extrémité amont du pignon satellite 28, cette seconde denture 34 étant en prise avec une denture interne de la première couronne fixe 16.

Chaque pignon 28 est par ailleurs monté et guidé en rotation sur un support cylindrique 36 du porte-satellites 30 au moyen de paliers 38 tels que des paliers à rouleaux par exemple.

La lubrification et le refroidissement du réducteur 12 sont assurés par des gicleurs 40, 42, 44 qui sont portés par des éléments fixes du moteur et qui sont orientés vers les zones d'engrènement des dentures extérieures 32 des pignons satellites 28 avec la seconde couronne extérieure 20, des dentures extérieures 34 des pignons satellites 28 avec la première couronne extérieure 16 et des dentures périphériques 32 des pignons satellites 28 avec le pignon central 14 respectivement, comme représenté schématiquement en figure 1.

D'autres gicleurs 46 et 48 sont utilisés pour la lubrification et le refroidissement de paliers 50 de guidage en rotation de l'arbre 10 et des paliers 24 de guidage en rotation de l'arbre 22 solidaire de la seconde couronne extérieure 20.

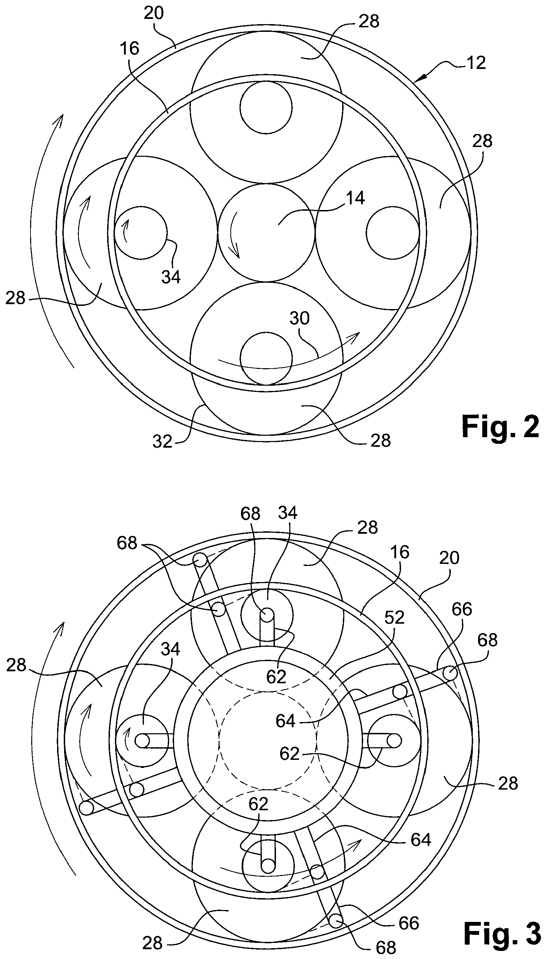

On retrouve en figure 2 les composants essentiels du réducteur 12, à savoir le pignon central 14, la première couronne extérieure fixe 16, la seconde couronne extérieure 20 solidaire de l'arbre 22, et les pignons satellites 28, au nombre de quatre dans cet exemple de réalisation, les flèches indiquant le sens de rotation des pignons et de la couronne extérieure mobile 20 et du porte-satellites 30.

On voit que quand le pignon central 14 est entraîné en rotation dans le sens contraire des aiguilles d'une montre, les pignons satellites 28 et la couronne extérieure mobile 20 sont entraînés en rotation dans le sens des aiguilles d'une montre tandis que le porte-satellites 30 tourne dans le sens contraire des aiguilles d'une montre.

Dans cette réalisation connue, la lubrification et le refroidissement des zones d'engrènement des dentures des pignons satellites avec le pignon central 14 et avec les couronnes 16 et 20 ne peuvent être assurés que par intermittence, les gicleurs 40, 42 et 44 étant fixes en rotation et ne pouvant suivre le mouvement orbital des pignons satellites 28 à l'intérieur des couronnes. De plus, la technique antérieure n'apporte aucune solution à la lubrification et au refroidissement des paliers 38 des pignons satellites.

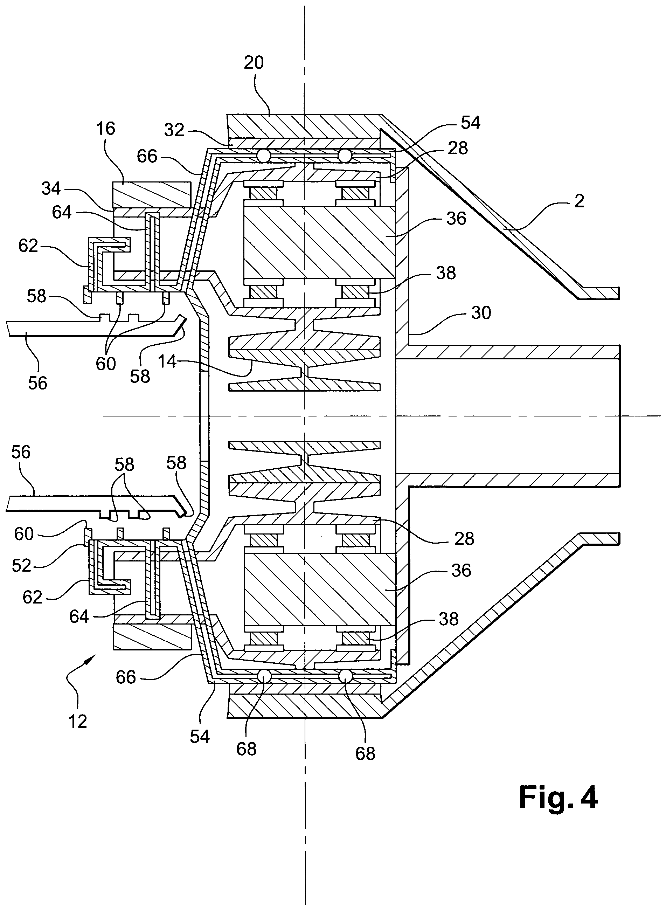

La présente invention permet de résoudre ce problème de façon simple, fiable et économique au moyen du dispositif représenté schématiquement dans les figures 3 et 4 et qui comprend essentiellement une enveloppe cylindrique 52 située du côté amont du réducteur 12, à l'intérieur de la couronne extérieure fixe 16, cette enveloppe cylindrique 52 étant solidaire en rotation du porte-satellites 30 auquel elle est fixée par des bras axiaux 54 qui s'étendent à l'intérieur du réducteur 12 entre les pignons satellites 28.

L'enveloppe cylindrique 52 forme une écope centrifuge de récupération de l'huile amenée par deux rampes 56 diamétralement opposées qui s'étendent depuis l'amont en direction du réducteur 12 le long de l'arbre portant le pignon central 14 et qui sont équipées d'injecteurs 58 projetant de l'huile dans des compartiments annulaires adjacents formés à l'intérieur de l'enveloppe cylindrique 52 par des cloisons radiales internes 60 de celle-ci. Chaque compartiment annulaire de l'enveloppe cylindrique 52 est relié à des conduits radiaux ou sensiblement radiaux 62, 64, 66 qui s'étendent vers l'extérieur et qui sont équipés à leurs extrémités libres de gicleurs 68 orientés vers les zones à lubrifier et refroidir, c'est-à-dire vers les roulements 38 des pignons satellites 28 et vers les zones d'engrènement des pignons satellites 28 avec la couronne extérieure fixe 16, la couronne extérieure mobile 20 et éventuellement avec le pignon central 14.

Comme on l'a représenté schématiquement en figure 3, les gicleurs 68 sont positionnés angulairement par rapport aux pignons satellites 28 de façon à se trouver en amont de ces pignons par rapport à leur sens de rotation et à diriger tangentiellement les jets d'huile sur les dentures des pignons dans les zones où elles entrent en prise avec les dentures de la première couronne 16, de la seconde couronne 20 et du pignon central 14 respectivement.

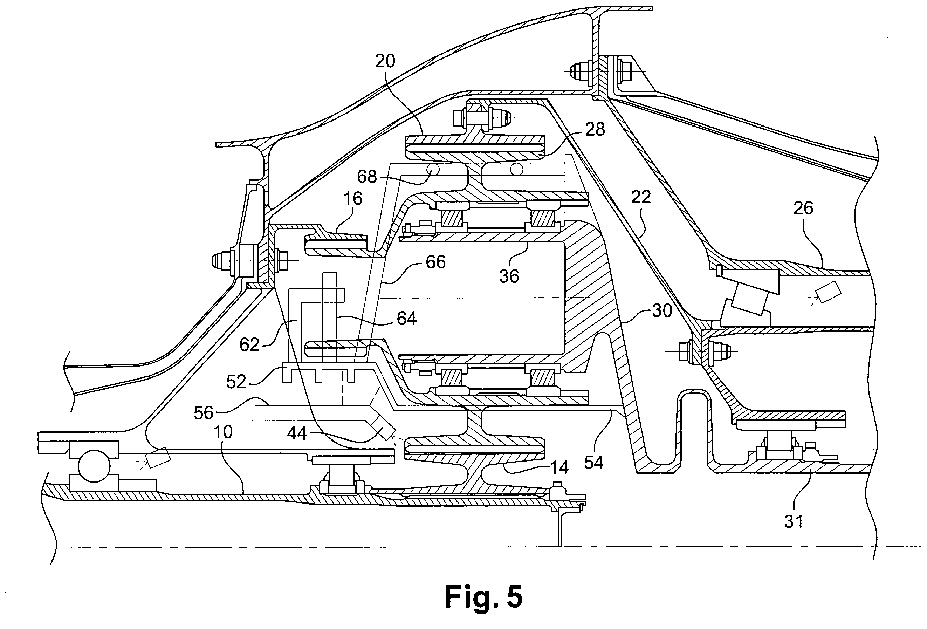

On a représenté schématiquement en figure 5 l'intégration d'un réducteur 12 selon l'invention dans une turbomachine du type de celle représentée en figure 1.

La lubrification et le refroidissement du pignon central 14 peuvent être assurés par un gicleur 44 monté à l'extrémité aval d'une rampe 56 d'amenée d'huile à l'intérieur de l'enveloppe cylindrique 52. Comme le pignon central 14 a un diamètre extérieur très nettement inférieur au diamètre interne des couronnes 16 et 20, la lubrification des zones d'engrènement des dentures périphériques 32 des pignons satellites 28 avec le pignon central 14 en deux points fixes diamétralement opposés peut suffire et crée beaucoup moins de problèmes qu'une lubrification intermittente des zones d'engrènement des dentures périphériques 32 et 34 des pignons satellites 28 avec les couronnes extérieures 20 et 16 respectivement.

Pour le reste, on retrouve en figure 5 les mêmes éléments qu'en figure 4, associés aux composants de la turbomachine de la figure 1.

L'invention est applicable également à un réducteur à train épicycloïdal ne comprenant qu'une couronne extérieure. Dans ce cas, c'est par exemple la première couronne extérieure 16 qui est supprimée, la seconde couronne extérieure 20 étant conservée. En réglant le pas des hélices, c'est-à-dire le calage angulaire des pales formant les hélices, on détermine la vitesse de l'une par rapport à l'autre, le freinage d'une hélice permettant d'accélérer l'autre hélice jusqu'à équilibre.

## Revendications

1. Réducteur à train d'engrenages épicycloïdal comprenant un pignon central (14), une couronne extérieure (16, 20) et des pignons satellites (28) en prise avec le pignon central (14) et avec la couronne extérieure (16, 20) et montés libres en rotation sur un porte-satellites (30), le réducteur comprenant des moyens de lubrification et de refroidissement par projection d'huile sur les dentures (32, 34) et les axes des pignons satellites (28), les moyens de lubrification et de refroidissement comprenant une enveloppe cylindrique (52) solidaire du porte-satellites (30) et formant une écope de récupération d'huile entourant des moyens fixes (56) d'amenée d'huile.

2. Réducteur selon la revendication 1, **caractérisé en ce que** l'enveloppe cylindrique (52) comprend des conduits radiaux (62, 64, 66) alimentant en huile des gicleurs (68) orientés vers les dentures et les axes des pignons satellites 28.

3. Réducteur selon la revendication 1 ou 2, **caractérisé en ce que** les moyens fixes d'amenée d'huile comprennent au moins une rampe (56) parallèle à l'arbre du pignon central (14) et portant des injecteurs (58) orientés radialement vers l'enveloppe cylindrique (52), celle-ci comprenant des compartiments annulaires séparés par des cloisons radiales et reliés chacun à des conduits (62, 64, 66) alimentant des gicleurs (68).

4. Réducteur selon la revendication 3, **caractérisé en ce que** les moyens fixes d'amenée d'huile comprennent deux rampes (56) diamétralement opposées et parallèles portant des injecteurs (58) orientés vers les compartiments annulaires de l'enveloppe cylindrique (52).

5. Réducteur selon l'une des revendications précédentes, **caractérisé en ce que** les gicleurs (68) sont disposés en amont des pignons satellites par rapport à leur sens de rotation et orientés tangentiellement aux dentures des pignons satellites vers les zones d'engrènement de ces dentures avec la couronne extérieure (16, 20).

6. Réducteur selon l'une des revendications précédentes, **caractérisé en ce que** l'enveloppe cylindrique (52) et le porte-satellites (30) sont positionnés axialement de part et d'autre du pignon central (14) et sont reliés par des bras axiaux (54) s'étendant entre les pignons satellites (28).

7. Réducteur selon l'une des revendications précédentes, **caractérisé en ce qu'**il comprend deux couronnes extérieures coaxiales (16, 20), dont les dentures sont en prise avec des dentures périphériques des pignons satellites (28), l'une de ces couronnes étant fixe et l'autre étant mobile en rotation.

8. Turbomachine, en particulier d'un moteur d'avion, **caractérisée en ce qu'**elle comprend un réducteur à train d'engrenages épicycloïdal selon l'une des revendications précédentes, reliant un arbre de turbine (10) à un ou deux arbres d'entraînement d'hélice.

## Patentansprüche

1. Untersetzungsgetriebe mit Planetengetriebe, enthaltend ein Sonnenrad (14), einen Außenkranz (16, 20) und Satellitenräder (28), die mit dem Sonnenrad (14) und mit dem Außenkranz (16, 20) kämmen und an einem Satellitenträger (30) frei drehbar gelagert sind, wobei das Untersetzungsgetriebe Einrichtungen zum Schmieren und Kühlen durch Aufspritzen von Öl auf die Zahnräder (32, 34) und die Achsen der Satellitenräder (28) aufweisen, wobei die Schmier- und Kühleinrichtungen einen Zylindermantel (52) aufweisen, der fest mit dem Satellitenträger (30) verbunden ist, und ein Ölrückgewinnungsgefäß bilden, das feststehende Ölzuführeinrichtungen (56) umgibt.

2. Untersetzungsgetriebe nach Anspruch 1, **dadurch gekennzeichnet, dass** der Zylindermantel (52) radial verlaufende Leitungen (62, 64, 66) enthält, die Spritzdüsen (68) mit Öl versorgen, die zu den Zahnrädern und den Achsen der Satellitenräder (28) hin ausgerichtet sind.

3. Untersetzungsgetriebe nach Anspruch 1 oder 2, **dadurch gekennzeichnet, dass** die feststehenden Ölzuführeinrichtungen zumindest eine Rampe (56) aufweisen, die parallel zur Welle des Sonnenrads (14) verläuft und Injektoren (58) trägt, die radial zum Zylindermantel (52) hin ausgerichtet sind, wobei dieser ringförmige Fächer aufweist, die durch radiale Trennwände getrennt sind und jeweils mit Leitungen (62, 64, 66) verbunden sind, die die Spritzdüsen (68) versorgen.

4. Untersetzungsgetriebe nach Anspruch 3, **dadurch gekennzeichnet, dass** die feststehenden Ölzuführeinrichtungen zwei Rampen (56) aufweisen, die diametral entgegengesetzt sind und parallel verlaufen und Injektoren (58) tragen, die zu den ringförmigen Fächern des Zylindermantels (52) hin ausgerichtet sind.

5. Untersetzungsgetriebe nach einem der vorangehenden Ansprüche, **dadurch gekennzeichnet, dass** die Spritzdüsen (68) in Rotationsrichtung den Satellitenrädern vorgelagert sind und tangential bezüglich der Zahnräder der Satellitenräder und zu Eingriffsbereiche dieser Zahnräder mit dem Außenkranz (16, 20) hin ausgerichtet sind.

6. Untersetzungsgetriebe nach einem der vorangehenden Ansprüche, **dadurch gekennzeichnet, dass** der Zylindermantel (52) und der Satellitenträger (30) axial beiderseits des Sonnenrads (14) positioniert sind und über axiale Arme (54) verbunden sind, die sich zwischen den Satellitenrädern (28) erstrecken.

7. Untersetzungsgetriebe nach einem der vorangehenden Ansprüche, **dadurch gekennzeichnet, dass** es zwei koaxiale Außenkränze (16, 20) enthält, deren Zahnräder mit Umfangsräder der Satellitenräder (28) kämmen, wobei einer dieser Kränze feststehend und der andere drehbeweglich ausgeführt ist.

8. Turbotriebwerk, insbesondere für Flugzeugmotoren, **dadurch gekennzeichnet, dass** es ein Untersetzungsgetriebe mit Planetengetriebe nach einem der vorangehenden Ansprüche aufweist, das eine Turbinenwelle (10) mit einer oder mit zwei Propellerantriebswellen verbindet.

## Claims

1. Epicyclic stepdown gearing comprising a central gear (14), an outer ring (16, 20), and planet gears (28) meshing with the central gear (14) and with the outer ring (16, 20), the planet gears being mounted to rotate freely on a planet-carrier (30), the gearing including lubricating and cooling means operating by spraying oil onto the sets of teeth (32, 34) and onto the axes of the planet gears (28), the lubricating and cooling means comprising a cylindrical casing (52) secured to the planet-carrier (30) and forming a scoop for recovering oil, which casing surrounds stationary means (56) for delivering oil.

2. Gearing according to claim 1, **characterized in that** the cylindrical casing (52) includes radial ducts (62, 64, 66) for feeding oil to nozzles (68) pointing towards the sets of teeth and the axes of the planet gears (28).

3. Gearing according to claim 1 or claim 2, **characterized in that** the stationary means for delivering oil comprise at least one strip (56) parallel to the shaft of the central gear (14) and carrying injectors (58) pointing radially towards the cylindrical casing (52), the casing including annular compartments that are separated by radial partitions, each of which is connected to ducts (62, 64, 66) for feeding nozzles (68).

4. Gearing according to claim 3, **characterized in that** the stationary means for delivering oil comprise two diametrically opposite and parallel strips (56) carrying injectors (58) pointing towards the annular compartments of the cylindrical casing (52).

5. Gearing according to any preceding claim, **characterized in that** the nozzles (68) are located upstream from the planet gears relative to their direction of rotation, and are pointing tangentially relative to the sets of teeth of the planet gears towards the zones where said sets of teeth mesh with the outer ring (16, 20).

6. Gearing according to any preceding claim, **characterized in that** the cylindrical casing (52) and the planet-carrier (30) are positioned axially on either side of the central gear (14) and they are connected together by axial arms (54) extending between the planet gears (28) .

7. Gearing according to any preceding claim, **characterized in that** it includes two coaxial outer rings (16, 20), with the sets of teeth of the rings meshing with peripheral sets of teeth of the planet gears (28), one of the rings being stationary and the other being movable in rotation.

8. A turbomachine, in particular an aeroengine, **characterized in that** it includes epicyclic stepdown gearing according to any preceding claim, connecting a turbine shaft (10) to one or two propeller drive shafts.
